# EUROPEAN PATENT SPECIFICATION

(11) **EP 3 234 237 B1**
(45) Date of publication and mention of the grant of the patent: **19.07.2023**
(21) Application number: 15816844.3
(22) Date of filing: 18.12.2015
(51) Int. Cl.: D03D 15/56, D03D 15/513

(54) **ELASTIC AND RESISTANT FABRIC**
ELASTISCHES UND RESISTENTES GEWEBE
TISSU ÉLASTIQUE ET RÉSISTANT

(30) Priority: 19.12.2014 GB 201422726
(43) Date of publication of application: 25.10.2017
(73) Proprietor: Heathcoat Fabrics Limited, Devon EX16 5LL (GB)
(72) Inventor: FRY, Elizabeth, Tiverton Devon EX16 5LL (GB); WILLEY, Nicola, Tiverton Devon EX16 5LL (GB)
(74) Representative: Script IP Limited
(86) International application number: PCT/GB2015/054088
(87) International publication number: WO 2016/097765

(56) References cited:
- EP-A1- 2 677 071
- WO-A1-00/19123
- JP-A- 2002 168 303
- US-A1- 2007 178 792

## Description

The present invention relates to fabrics and methods of producing fabrics. More particularly, the present invention relates to woven fabrics.

Industrial fabrics often have to withstand aggressive environments for extended periods. Such aggressive environments may be at high temperature, or may subject fabrics to high friction or high abrasion.

One aggressive environment for industrial fabrics is when they are used in transmission belts, especially toothed transmission belts. Toothed transmission belts generally have a body of an elastomeric material, usually rubber, with a plurality of teeth covered by a coating fabric. The coating fabric is usually treated with a primer adhesive (for example, resorcinol formaldehyde latex, RFL) to increase adhesion between the rubber body and fabric.

US-A-2007/0178792 discloses a power transmission belt with a plurality of teeth formed on the inside of its body and spaced along its length.

EP-A-2 677 071 discloses a cover fabric for a power transmission belt.

JP2002168303 discloses a toothed belt with its mating surface having high wear resistance.

The purpose of the coating fabric in belts is to protect the working surface from wear by increasing the abrasion resistance of the belt, reduce the friction on the working surface of the belt and support the teeth thereby reducing deformation and damage.

EP-A-2 570 529 discloses fabrics for use on the working surface of ribbed belts.

EP-A-2 570 698 discloses a V belt with a top layer formed as a belt rear part and a substructure with a power transmission zone. The power transmission zone is provided with a fabric.

WO-A-01/019133 discloses a synchronous drive belt designed for improved tooth formation.

US-A-2011/003659 discloses a toothed power transmission belt with a heat and wear resistant fabric for tooth support.

EP-A-1 455 113 discloses a toothed belt and a method of fabrication of a toothed belt.

US 5,529,545 discloses a toothed belt with a woven fabric made of covered yarn with a core of a polyurethane elastic yarn, an aromatic polyamide spirally turned on the core and a synthetic fibre yarn spirally turned on the aromatic polyamide yarn. Unfortunately, such a yarn is relatively complex to manufacture and fabric made from such yarn is relatively expensive.

There has developed a need to replace conventional gear or chain drive systems with toothed belts without having to make significant changes to the drive systems as a whole. In these cases a toothed belt would function in contact with, or even partially immersed in, oil. The belt and its components including the fabric should have a long life, even under such conditions.

WO-A-2005/080820 discloses a toothed belt for use in oil comprising a body and a plurality of teeth, the teeth being covered by a coating fabric.

WO00/19123 A1 discloses a fabric for use in transmission belts comprising a plurality of weft yarns comprising a first resilient core and a synthetic fibre thread made of aliphatic polyamide wrapped around the resilient core, wherein the covered yarn is a double covered yarn, the double covered yarn having an inner cover yarn and an outer cover yarn, and wherein the first inner cover yarn comprises the same material as the first outer cover yarn.

It is an aim of the present invention to address the problems discussed above.

The present invention accordingly provides, in a first aspect, a fabric according to claim 1 comprising a plurality of first yarns interspersed with a plurality of second yarns, wherein the first yarns comprise a first resilient core and at least one synthetic fibre thread wrapped around the first resilient core to form a first covered yarn, and wherein the second yarns comprise a second resilient core and at least one resistant fibre thread wrapped around the second resilient core to form a second covered yarn.

This is advantageous because providing two yarns interspersed in the fabric provides the benefit of both the resistant fibre thread and the synthetic fibre thread in a cost-effective and production-efficient manner,

The fabric is usually a woven fabric. Preferably, the fabric comprises a plurality of first weft yarns interspersed with a plurality of second weft yarns.

The at least one resistant fibre thread comprises a chemically resistant fibre thread. The resistant fibre thread comprises an aromatic polyamide (i.e. an aramid). The aramid may be a meta-aramid, or a para-aramid or a copolymer aramid or a mixture of two or more types of aramid.

The synthetic fibre thread comprises a polyamide (e.g. Nylon), for example PA66.

Thus, there is provided a fabric comprising a plurality of first yarns interspersed with a plurality of different second yarns, wherein the first yarns (preferably first weft yarns) comprise a first resilient core and at least one polyamide fibre thread wrapped around the first resilient core to form a first covered yarn, and wherein the second yarns (preferably second weft yarns) comprise a second resilient core and at least one aramid fibre thread wrapped around the second resilient core to form a second covered yarn.

Generally, the first resilient core will comprise a first elastomeric fibre and/or the second resilient core will comprise a second elastomeric fibre. Preferably, the first elastomeric fibre and/or the second elastomeric fibre each comprise polyurethane.

The first yarns preferably comprise the first resilient core and two polyamide fibre threads wrapped around the first resilient core.

The second yarns preferably comprise the second resilient core and two aramid fibre threads wrapped around the second resilient core.

The first covered yarn and/or the second covered yarn is, or are, double covered yarn, the double covered yarn having an inner cover yarn and an outer cover yarn. The first inner cover yarn will comprise the same material as the first outer cover yarn, and/or the second inner cover yarn will comprise the same material as the second outer cover yarn.

Thus, the first yarn preferably comprises a double covered yarn having an inner cover polyamide yarn and an outer cover polyamide yarn.

Thus, the second yarn preferably comprises a double covered yarn having an inner cover aramid yarn and an outer cover aramid yarn.

This is greatly advantageous because it allows great design freedom, allowing the first yarn and second yarn to be placed independently in the design enabling fabric having particular beneficial properties to be produced.

The structure of the yarns will usually be such that the first inner cover yarn is wrapped around the first resilient core in a first direction and the first outer cover yarn is wrapped around the first resilient core and the first inner cover yarn in a second, opposite direction. Similarly, the second inner cover yarn may be wrapped around the second resilient core in a first direction and the second outer cover yarn may be wrapped around the second resilient core and the second inner cover yarn in a second, opposite direction. The directions may be, for example, S and Z or Z and S.

Preferably, the first yarn will comprise a texturised polyamide fibre.

More preferably the first yarn will comprise a false twist texturised polyamide fibre to bulk the yarn.

The first yarns may be interspersed with the second yarns in generally any suitable pattern and/or ratio. For example, the first yarn (comprising Nylon) may form two weft threads to one weft thread formed by the second yarn (comprising aramid), three weft threads of the first yarn to one weft thread formed by the second yarn, four weft threads of the first yarn to one weft thread formed by the second yarn, or five weft threads of the first yarn to one weft thread formed by the second yarn.

However, in a particular embodiment, the plurality of first yarns alternates with the plurality of second yarns (e.g. one weft of the first yarn alternating with one weft of the second yarn).

The wefts of the first yarn and/or the second yarn may be interspersed using a double pick. For example, the first yarn may form four weft threads to two weft threads formed by the second yarn, the first yarn may form six weft threads to two weft threads formed by the second yarn, or the first yarn may form eight weft threads to two weft threads formed by the second yarn.

In a further embodiment, the plurality of first yarns is inserted by a double pick with the plurality of second yarns also inserted by a double pick (e.g. two wefts of the first yarn alternating with two wefts of the second yarn).

Suitable weave patterns for either the first weft yarn or the second weft yarn or both the first and second weft yarn comprise 2×2 twill (e.g. with a double pick insertion or e.g. not faced), 3×1 twill, 1×3 twill, plain and/or matt.

Particular patterns may be selected from (e.g. wherein the first yarn comprises nylon and the second yarn comprises aramid): 1×3 twill second yarn (e.g. aramid), plain first yarn (e.g. nylon); 2×2 twill double pick insertion, not faced for both first and second yarns (e.g. nylon and aramid); 3×1 twill second yarn (e.g. aramid), plain first yarn (e.g. nylon); 2×1 matt second yarn (e.g. aramid), 3×1 twill first yarn (e.g. nylon); 2×2 twill for both first and second yarn (e.g. nylon and aramid), not faced.

The fabric may be woven in a faced-weave pattern. One way in which this may be accomplished is if the first yarn is woven in a first weave pattern and the second yarn is woven in a second weave pattern. The first weave pattern may comprise a plain weave pattern. An advantage of this is that a plain weave pattern aids in restricting extension to the correct range (i.e. it prevents or reduces the chances of the fabric from being too narrow).

Alternatively, a faced weave may be used in the first weave pattern for the first weft. This is advantageous because it achieves the effect of a (substantially) Nylon back, with (substantially) aramid face. The first weave pattern may, thus, comprise a plurality of floats. Thus, the first weave pattern may comprise e.g. a twill weave pattern (for example a 3×1 or 1×3 twill pattern).

The second weave pattern may comprise a plurality of floats. This has the advantage that, with the second yarn comprising aramid, the floats cause the aramid wefts to bunch up after weaving and force the first yarn wefts to the back of the fabric. This results in a predominantly aramid face and a predominantly Nylon back to the fabric.

One suitable second weave pattern comprises a twill weave pattern, preferably a 1×3 twill.

Thus, the present invention accordingly provides, in a second aspect, a woven fabric comprising aromatic polyamide yarn and polyamide yarn, wherein the fabric has a weave pattern comprising a plurality of floats and wherein the fabric has a substantially aromatic polyamide face and a substantially polyamide back.

A faced woven fabric is advantageous because the expensive aramid material may be located on the working face of the fabric. The working face may be more exposed to the aggressive conditions including friction, oil, chemicals or high temperature present in the belt environment (if the fabric is used in a transmission belt e.g. a ribbed or V belt). Aramid is more resistant to these conditions than the Nylon material. The aramid will thus provide a layer of protection for the less chemically and condition resistant material, Nylon.

In addition, the back being predominantly Nylon is advantageous because Nylon has better rubber adhesion properties than aramid (due to its more reactive chemical structure). Thus, if used in a transmission where the fabric is covered with rubber, the Nylon back adheres well to the rubber.

Fabrics according to the disclosure find use in many industrial applications. A suitable application is to incorporate such fabrics in, in particular, toothed transmission belts. Thus, an aspect of the invention provides a transmission belt, preferably a toothed belt, having a woven fabric according to the first or second aspect of the invention adhered to its working surface. Such a transmission belt is particularly hard wearing in oil-containing environments.

Fabrics according to the first or second aspects of the invention will, as discussed above, usually be produced by weaving.

The present invention accordingly provides, in a third aspect, a method of producing a fabric according to claim 11, the method comprising weaving a plurality of first weft yarns interspersed with a plurality of second weft yarns, wherein the first weft yarns comprise a first resilient core and at least one synthetic fibre thread wrapped around the first resilient core to form a first covered yarn, and wherein the second weft yarns comprise a second resilient core and at least one resistant fibre thread wrapped around the second resilient core to form a second covered yarn.

Many of the optional and preferred features of the third aspect of the invention correspond to those of the first aspect with appropriate modification.

In this specification, the word "aramid" is used interchangeably with "aromatic polyamide". "Polyamide" is used interchangeably with "Nylon" and indicates an aliphatic polyamide.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

It is to be noted that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any embodiment or aspect of the invention may be combined in any suitable manner, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

In the accompanying drawings,
Figure 1 illustrates schematically the structure of double covered yarn as used in embodiments of the invention.
Figure 2 illustrates schematically a fabric produced using the weave pattern of Table 3, below.
Figure 3(a) is a photograph of the aromatic polyamide (aramid) face of an embodiment of the fabric produced according to the weave pattern of Figure 2.
Figure 3(b) shows the polyamide back of an embodiment of the fabric whose face is shown in Figure 3(a) and produced according to the weave pattern of Figure 2.

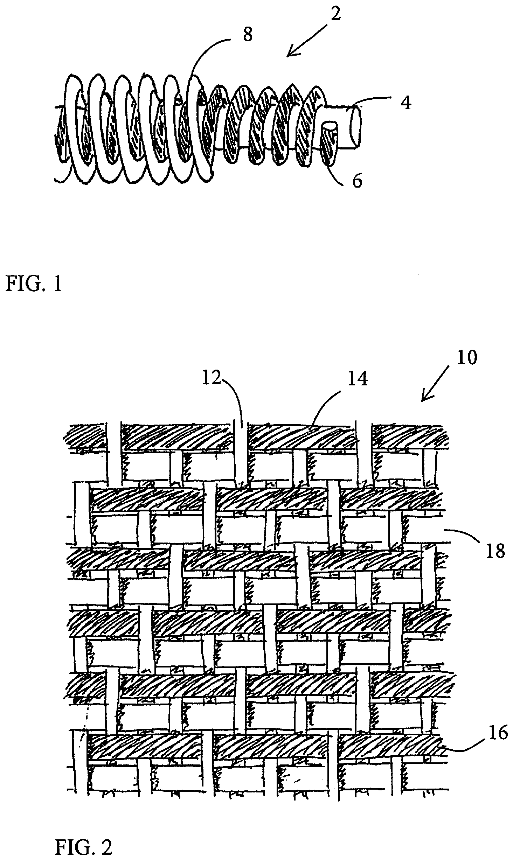

Figure 1 shows schematically the structure of a double covered yarn 2. The same general structure is applicable both to the aramid double covered yarn and the Nylon double covered yarn. The core 4 of the yarn comprises an elastomeric polyurethane (Dorlastan ^{™} filament obtained from Asahi Kasei). The core 4 is covered by an inner cover yarn 6 produced by twisting/wrapping the inner cover yarn 6 around the elastic core 4 in an S direction. The core 4 and inner cover yarn 6 are subsequently covered by an outer core yarn 8 twisted/wrapped around in a Z direction. Twisting the inner 6 and outer core yarns 8 in opposite directions helps to balance the yarn and eliminate any twist liveliness.

Figure 2 shows a schematic of the fabric 10 according to the pattern referred to in Table 3, below. The warp threads 12 of flat PA66 high tenacity, non-textured, 235f34 dtex yarn have alternating weft threads of aramid 14 and Nylon 18 woven according to the pattern in Table 3. The 1×3 twill weave of the aramid 14 threads results in long floats 16. The floats 16 cause the aramid wefts 14 to bunch up after weaving and force the Nylon wefts 18 to the back of the fabric. This results in a predominantly aramid face and a predominantly Nylon back to the fabric.

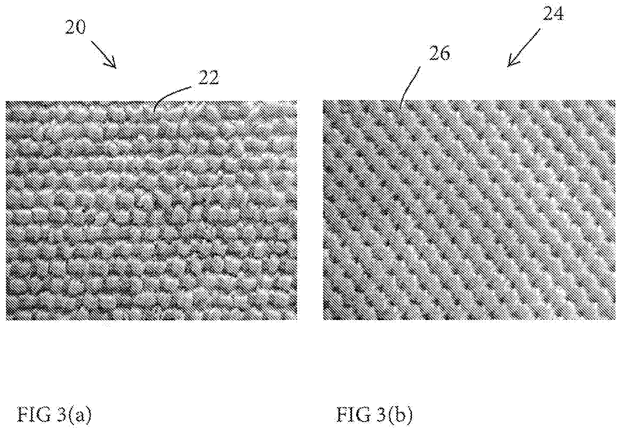

Figure 3 (a) shows the aramid face 20 showing predominantly aramid yarn 22 and Figure 3(b) shows the Nylon back 24 showing predominantly Nylon yarn 26.

The invention is further illustrated by the following Examples.

### Example 1

In this Example, a fabric according to an embodiment of the invention was produced.

### Yarn production.

The weft yarn was produced using the following raw material.
1. 400 dtex polyurethane containing elastomer as core (Dorlastan ^{™} filament obtained from Asahi Kasei)
2. 320 dtex polyurethane containing elastomer as core (Dorlastan ^{™} filament obtained from Asahi Kasei).
3. 440 dtex aramid (Technora^{™} obtained from Teijin Aramid BV)
4. 117 dtex polyamide (PA66 High Tenacity)

Prior to assembly of the yarns, PA 66 was false twist texturised and formed into a 2 ply yarn. Subsequently, PA66 was twist textured to align filaments and secure the bundle. This has the advantage of reducing or preventing looping, filamentation, etc.

The PA66 was double covered on to the polyurethane core (320dtex).

Similarly, the aramid was double covered on to the polyurethane core (400 dtex).

In both cases, double covering involved twisting an inner cover around the elastic core in an S direction and the outer core in a Z direction. This helps to balance the yarn and eliminate any twist liveliness. The structure of a double covered yarn is illustrated schematically in Figure 1 and described above.

The properties of the yarns are indicated in Table 1.

**Table 1**

| | Linear Density (dtex) | Tensile Strength (gf) | Extension at Break (%) | Hand Stretch (%) |
|---|---|---|---|---|
| Aramid Yarn | 810 | 2573 | 81 | 92 |
| Nylon Yarn | 959 | 2140 | 80 | 128 |

### Fabric Production.

In order to create one face which is predominantly aramid and the other predominantly nylon, a faced weave pattern was used. This was created using two alternating weave patterns, the first being a plain weave for the Nylon yarn, the second being a 1×3 twill for the aramid yarn, the pattern being as indicated in Table 3, below. The long floats in the 1×3 twill allow the aramid wefts to bunch up after weaving and almost completely bury the Nylon wefts underneath. This results in a predominantly aramid face and a predominantly Nylon back to the fabric. The warp yarn was flat PA66 High Tenacity, non-textured, 235f34 dtex. The warp yarn is generally a non-critical component of the fabric. In this fabric the warp thread made up 10-30% of the overall fabric weight. Alternative warp yarns may be textured nylon, aramid, or any other suitable yarn.

### Example 2.

In this Example a number of fabrics were produced as in Example 1, but using different linear density elastomeric cores for the Nylon and aramid yarn. Different cores affected the curl of the fabric once produced.

Details of the cores in each of the yarns in the fabrics produced in this Example are as indicated in Table 2, together with an indication of the degree of curl of the fabric.

**Table 2.**

| Fabric | Linear density Nylon PU Core (dtex) | Linear density Aramid PU Core (dtex) | Degree of Curl (1=least; 4 = worst) |
|---|---|---|---|
| A | 320 | 400 | 4 |
| B | 400 | 320 | 1 |
| C | 400 | 400 | 3 |
| D | 320 | 320 | 2 |

This Example indicates that the lower linear density of PU core for the aramid yarn results in less curl.

The weave pattern for the fabric referred to in Example 1 and 2 and as shown schematically in Figure 2 is as indicated in Table 3, below. Other fabrics were woven using the same yarns as indicated above for Example 1 and the weave patterns indicated in Tables 4, 5, 6, 7 and 8, below. Fabrics according to all these patterns also form embodiments of the invention.

**Table 3. Aramid 1×3 twill, nylon plain.**

| | | | | **Yarn** |
|---|---|---|---|---|
| | | | X | Aramid |
| | X | | X | Nylon |
| | | X | | Aramid |
| X | | X | | Nylon |
| | X | | | Aramid |
| | X | | X | Nylon |
| X | | | | Aramid |
| X | | X | | Nylon |

**Table 4. Aramid 3×1 twill, nylon plain.**

| | | | | **Yarn** |
|---|---|---|---|---|
| X | X | X | | Aramid |
| X | | X | | Nylon |
| X | X | | X | Aramid |
| | X | | X | Nylon |
| X | | X | X | Aramid |
| X | | X | | Nylon |
| | X | X | X | Aramid |
| | X | | X | Nylon |

**Table 5. 2×2 twill double pick insertion. The polyurethane core was of 320 dtex, the fabric produced using this pattern does not have an aramid nor a nylon predominant face.**

| | | | | **Yarn** |
|---|---|---|---|---|
| X | | | X | Aramid |
| X | | | X | Aramid |
| | | X | X | Nylon |
| | | X | X | Nylon |
| | X | X | | Aramid |
| | X | X | | Aramid |
| X | X | | | Nylon |
| X | X | | | Nylon |

**Table 6. Aramid 2×1 matt, nylon 3×1 twill. The polyurethane core was of 320 dtex, the fabric produced using this pattern does have a predominantly nylon / aramid face.**

| | | | | **Yarn** |
|---|---|---|---|---|
| X | X | X | | Nylon |
| | | X | X | Aramid |
| | X | X | X | Nylon |
| X | X | | | Aramid |
| X | | X | X | Nylon |
| | | X | X | Aramid |
| X | X | | X | Nylon |
| X | X | | | Aramid |

**Table 7. 2×2 twill double pick insertion. The polyurethane core was of 320 dtex, the fabric produced using this pattern does not have an aramid nor a nylon predominant face.**

| | | | | **Yarn** |
|---|---|---|---|---|
| X | | | X | Aramid |
| X | | | X | Nylon |
| | | X | X | Aramid |
| | | X | X | Nylon |
| | X | X | | Aramid |
| | X | X | | Nylon |
| X | X | | | Aramid |
| X | X | | | Nylon |

**Table 8. 2×2 twill, not faced. The polyurethane core was of 320 dtex, the fabric produced using this pattern does not have an aramid nor a nylon predominant face.**

| | | | | **Yarn** |
|---|---|---|---|---|
| X | | | X | Nylon |
| | | X | X | Aramid |
| | X | X | | Nylon |
| X | X | | | Aramid |

## Claims

1. A fabric (10) for use in transmission belts, the fabric comprising a plurality of first weft yarns (18) interspersed with a plurality of second weft yarns (14), wherein the first weft yarns (18) comprise a first resilient core and an aliphatic polyamide fibre thread wrapped around the first resilient core to form a first covered yarn, and wherein the second weft yarns (14) comprise a second resilient core and an aramid fibre thread wrapped around the second resilient core to form a second covered yarn,
wherein the first covered yarn and/or the second covered yarn is, or are, double covered yarn, the double covered yarn having an inner cover yarn and an outer cover yarn, and
wherein the first inner cover yarn comprises the same material as the first outer cover yarn, and/or the second inner cover yarn comprises the same material as the second outer cover yarn.

2. A fabric (10) as claimed in claim 1, wherein the first resilient core comprises a first elastomeric fibre and/or the second resilient core comprises a second elastomeric fibre.

3. A fabric (10) as claimed in claim 2, wherein the first elastomeric fibre and/ or the second elastomeric fibre comprise polyurethane.

4. A fabric (10) as claimed in any one of the preceding claims, wherein the first weft yarn (18) comprises a double covered yarn having an inner cover polyamide yarn and an outer cover polyamide yarn.

5. A fabric (10) as claimed in any one of the preceding claims, wherein the second weft yarn (14) comprises a double covered yarn having an inner cover aramid yarn and an outer cover aramid yarn.

6. A fabric (10) as claimed in any one of the preceding claims, wherein the first inner cover yarn is wrapped around the first resilient core in a first direction and the first outer cover yarn is wrapped around the first resilient core and the first inner cover yarn in a second, opposite direction; and/or the second inner cover yarn is wrapped around the second resilient core in a first direction and the second outer cover yarn is wrapped around the second resilient core and the second inner cover yarn in a second, opposite direction.

7. A fabric (10) as claimed in any one of the preceding claims, wherein the first weft yarn (18) comprises a texturised synthetic fibre.

8. A fabric (10) as claimed in claim 7, wherein the texturised synthetic fibre comprises false twist texturised synthetic fibre.

9. A fabric (10) as claimed in any one of the preceding claims, wherein the fabric (10) is woven.

10. A fabric (10) as claimed in any one of the preceding claims, wherein the plurality of first weft yarns (18) alternates with the plurality of second weft yarns (14).

11. A method of producing a fabric (10) for use in transmission belts, the method comprising
weaving a plurality of first weft yarns (18) interspersed with a plurality of second weft yarns (14),
wherein the first weft yarns (18) comprise a first resilient core and an aliphatic polyamide fibre thread wrapped around the first resilient core to form a first covered yarn, and the second weft yarns (14) comprise a second resilient core and an aramid fibre thread wrapped around the second resilient core to form a second covered yarn,
wherein the first covered yarn and/or the second covered yarn is, or are, double covered yarn, the double covered yarn having an inner cover yarn and an outer cover yarn, and
wherein the first inner cover yarn comprises the same material as the first outer cover yarn, and/or the second inner cover yarn comprises the same material as the second outer cover yarn.

## Patentansprüche

1. Gewebe (10) zur Verwendung in Treibriemen, wobei das Gewebe eine Vielzahl von ersten Schussgarnen (18) umfasst, die mit einer Vielzahl von zweiten Schussgarnen (14) durchsetzt sind, wobei die ersten Schussgarne (18) einen ersten elastischen Kern und einen aliphatischen Polyamidfaserfaden umfassen, der um den ersten elastischen Kern gewickelt ist, um ein erstes umsponnenes Garn zu bilden, und wobei die zweiten Schussgarne (14) einen zweiten elastischen Kern und einen Aramidfaserfaden umfassen, der um den zweiten elastischen Kern gewickelt ist, um ein zweites umsponnenes Garn zu bilden,
wobei das erste umsponnene Garn und/oder das zweite umsponnene Garn ein doppelt umsponnenes Garn ist oder sind, wobei das doppelt umsponnene Garn ein inneres Umspinnungsgarn und ein äußeres Umspinnungsgarn aufweist, und
wobei das erste innere Umspinnungsgarn das gleiche Material wie das erste äußere Umspinnungsgarn umfasst und/oder das zweite innere Umspinnungsgarn das gleiche Material wie das zweite äußere Umspinnungsgarn umfasst.

2. Gewebe (10) nach Anspruch 1, wobei der erste elastische Kern eine erste elastomere Faser umfasst und/oder der zweite elastische Kern eine zweite elastomere Faser umfasst.

3. Gewebe (10) nach Anspruch 2, wobei die erste elastomere Faser und/oder die zweite elastomere Faser Polyurethan umfasst.

4. Gewebe (10) nach einem der vorstehenden Ansprüche, wobei das erste Schussgarn (18) ein doppelt umsponnenes Garn umfasst, das ein inneres Umspinnungs-Polyamidgarn und ein äußeres Umspinnungs-Polyamidgarn aufweist.

5. Gewebe (10) nach einem der vorstehenden Ansprüche, wobei das zweite Schussgarn (14) ein doppelt umsponnenes Garn umfasst, das ein inneres Umspinnungs-Aramidgarn und ein äußeres Umspinnungs-Aramidgarn aufweist.

6. Gewebe (10) nach einem der vorstehenden Ansprüche, wobei das erste innere Umspinnungsgarn um den ersten elastischen Kern in einer ersten Richtung gewickelt ist und das erste äußere Umspinnungsgarn um den ersten elastischen Kern und das erste innere Umspinnungsgarn in einer zweiten, entgegengesetzten Richtung gewickelt ist; und/oder das zweite innere Umspinnungsgarn um den zweiten elastischen Kern in einer ersten Richtung gewickelt ist und das zweite äußere Umspinnungsgarn um den zweiten elastischen Kern und das zweite innere Umspinnungsgarn in einer zweiten, entgegengesetzten Richtung gewickelt ist.

7. Gewebe (10) nach einem der vorstehenden Ansprüche, wobei das erste Schussgarn (18) eine texturierte Kunstfaser umfasst.

8. Gewebe (10) nach Anspruch 7, wobei die texturierte Kunstfaser eine texturierte Kunstfaser mit Falschdrall umfasst.

9. Gewebe (10) nach einem der vorstehenden Ansprüche, wobei das Gewebe (10) gewebt ist.

10. Gewebe (10) nach einem der vorstehenden Ansprüche, wobei sich die Vielzahl der ersten Schussgarne (18) mit der Vielzahl der zweiten Schussgarne (14) abwechselt.

11. Verfahren zur Herstellung eines Gewebes (10) zur Verwendung in Treibriemen, das Verfahren umfassend
Weben einer Vielzahl von ersten Schussgarnen (18), die mit einer Vielzahl von zweiten Schussgarnen (14) durchsetzt sind,
wobei die ersten Schussgarne (18) einen ersten elastischen Kern und einen aliphatischen Polyamidfaserfaden umfassen, der um den ersten elastischen Kern gewickelt ist, um ein erstes umsponnenes Garn zu bilden, und die zweiten Schussgarne (14) einen zweiten elastischen Kern und einen Aramidfaserfaden umfassen, der um den zweiten elastischen Kern gewickelt ist, um ein zweites umsponnenes Garn zu bilden,
wobei das erste umsponnene Garn und/oder das zweite umsponnene Garn ein doppelt umsponnenes Garn ist oder sind, wobei das doppelt umsponnene Garn ein inneres Umspinnungsgarn und ein äußeres Umspinnungsgarn aufweist, und
wobei das erste innere Umspinnungsgarn das gleiche Material wie das erste äußere Umspinnungsgarn und/oder das zweite innere Umspinnungsgarn das gleiche Material wie das zweite äußere Umspinnungsgarn umfasst.

## Revendications

1. Tissu (10) pour utilisation dans des courroies de transmission, le tissu comprenant une pluralité de premiers fils de trame (18) entrecoupés d'une pluralité de seconds fils de trame (14), dans lequel les premiers fils de trame (18) comprennent une première âme élastique et un fil de fibre polyamide aliphatique enroulé autour de la première âme élastique pour former un premier fil guipé, et dans lequel les seconds fils de trame (14) comprennent une seconde âme élastique et un fil de fibre aramide enroulé autour de la seconde âme élastique pour former un second fil guipé,
dans lequel le premier fil guipé et/ou le second fil guipé est, ou sont, un fil double guipé, le fil double guipé présentant un fil enrobant interne et un fil enrobant externe, et
dans lequel le premier fil enrobant interne comprend la même matière que le premier fil enrobant externe, et/ou le second fil enrobant interne comprend la même matière que le second fil enrobant externe.

2. Tissu (10) selon la revendication 1, dans lequel la première âme élastique comprend une première fibre élastomère et/ou la seconde âme élastique comprend une seconde fibre élastomère.

3. Tissu (10) selon la revendication 2, dans lequel la première fibre élastomère et/ou la seconde fibre élastomère comprend du polyuréthane.

4. Tissu (10) selon l'une quelconque des revendications précédentes, dans lequel le premier fil de trame (18) comprend un fil double guipé présentant un fil polyamide enrobant interne et un fil polyamide enrobant externe.

5. Tissu (10) selon l'une quelconque des revendications précédentes, dans lequel le second fil de trame (14) comprend un fil double guipé présentant un fil aramide enrobant interne et un fil aramide enrobant externe.

6. Tissu (10) selon l'une quelconque des revendications précédentes, dans lequel le premier fil enrobant interne est enroulé autour de la première âme élastique dans un premier sens et le premier fil enrobant externe est enroulé autour de la première âme élastique et du premier fil enrobant interne dans un second sens opposé ; et/ou le second fil enrobant interne est enroulé autour de la seconde âme élastique dans un premier sens et le second fil enrobant externe est enroulé autour de la seconde âme élastique et du second fil enrobant interne dans un second sens opposé.

7. Tissu (10) selon l'une quelconque des revendications précédentes, dans lequel le premier fil de trame (18) comprend une fibre synthétique texturée.

8. Tissu (10) selon la revendication 7, dans lequel la fibre synthétique texturée comprend une fibre synthétique texturée fausse torsion.

9. Tissu (10) selon l'une quelconque des revendications précédentes, dans lequel le tissu (10) est tissé.

10. Tissu (10) selon l'une quelconque des revendications précédentes, dans lequel la pluralité de premiers fils de trame (18) sont alternés avec la pluralité de seconds fils de trame (14).

11. Procédé de production d'un tissu (10) pour utilisation dans des courroies de transmission, le procédé comprenant
le tissage d'une pluralité de premiers fils de trame (18) entrecoupés d'une pluralité de seconds fils de trame (14),
dans lequel les premiers fils de trame (18) comprennent une première âme élastique et un fil de fibre polyamide aliphatique enroulé autour de la première âme élastique pour former un premier fil guipé, et les seconds fils de trame (14) comprennent une seconde âme élastique et un fil de fibre aramide enroulé autour de la seconde âme élastique pour former un second fil guipé,
dans lequel le premier fil guipé et/ou le second fil guipé est, ou sont, un fil double guipé, le fil double guipé présentant un fil enrobant interne et un fil enrobant externe, et
dans lequel le premier fil enrobant interne comprend la même matière que le premier fil enrobant externe, et/ou le second fil enrobant interne comprend la même matière que le second fil enrobant externe.
